(19) Europäisches Patentamt
European Patent Office
Office européen des brevets

(11) EP 1 956 265 B1

(12) EUROPÄISCHE PATENTSCHRIFT

(45) Veröffentlichungstag und Bekanntmachung des Hinweises auf die Patenterteilung:
**21.09.2011 Patentblatt 2011/38**

(51) Int Cl.:
***F16F 15/139*** *(2006.01)*

(21) Anmeldenummer: **08001020.0**

(22) Anmeldetag: **21.01.2008**

(54) **Verfahren zum Vermindern von Schwingungen eines insgesamt ringscheibenförmigen Bauteils sowie ringscheibenförmiges Bauteil**

Method for reducing oscillations in an overall ring disc shaped component and ring disc shaped component

Procédé destiné à réduire les oscillations d'un composant essentiellement en forme de disque annulaire et composant en forme de disque annulaire

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **12.02.2007 DE 102007006797**

(43) Veröffentlichungstag der Anmeldung:
**13.08.2008 Patentblatt 2008/33**

(73) Patentinhaber: **Schaeffler Technologies GmbH & Co. KG**
**91074 Herzogenaurach (DE)**

(72) Erfinder: **Ryzhik, Boris, Dr.**
**76185 Karlsruhe (DE)**

(56) Entgegenhaltungen:
**WO-A1-96/10141     DE-A1- 4 341 371**

**Beschreibung**

Die Erfindung betrifft ein Verfahren zum Vermindern von Schwingungen eines insgesamt ringscheibenförmigen Bauteils mit wenigstens einer senkrecht zu einer Achse des Bauteils gerichteten kreisringscheibenförmigen Reibfläche, die infolge einer Relativdrehung zu einem Gegenbauteil in gleitender Reibberührung mit dem Gegenbauteil ist. Die Erfindung betrifft weiter ein ringscheibenförmiges Bauteil mit einer solchen Reibfläche. Derartige Bauteile sind aus der DE 43 41 371 A1 bekannt.

Schwingungen, insbesondere im Hörfrequenzbereich als unangenehm wahrgenommene Schwingungen, sind ein weit verbreitetes Problem, wenn eine gleitende Reibberührung zwischen zwei Bauteilen besteht. Ein typisches Beispiel solcher hörbaren Schwingungen sind Quietschgeräusche, die an Bremsen, Kupplungen usw. auftreten.

Der Erfindung liegt die Aufgabe zugrunde, Abhilfemaßnahmen für das Auftreten von insbesondere im Hörfrequenzbereich liegenden Schwingungen an einem insgesamt ringscheibenförmigen Bauteil mit wenigstens einer senkrecht zu einer Achse des Bauteils gerichteten kreisringscheibenförmigen Reibfläche, die in gleitender Reibberührung mit einem weiteren Bauteil ist.

Eine erste Lösung der vorgenannten Aufgabe wird mit einem Verfahren gemäß dem Anspruch 1 geschaffen, das mit dem Merkmal des Anspruchs 2 in vorteilhafter Weise weitergebildet wird.

Eine weitere Lösung der Erfindungsaufgabe wird mit einem ringscheibenförmigen Bauteil gemäß dem Anspruch 3 geschaffen. Das ringscheibenförmige Bauteil gemäß dem Anspruch 3 wird mit den Merkmalen der Ansprüche 4 bis 10 in vorteilhafter Weise weitergebildet.

Gemäß dem Anspruch 1 besteht ein erfindungsgemäßes Verfahren zum Vermindern von Schwingungen eines insgesamt ringscheibenförmigen Bauteils mit wenigstens einer senkrecht zu einer Achse des Bauteils gerichteten kreisringscheibenförmigen Reibfläche, die infolge einer Relativdrehung zu einem Gegenbauteil in gleitender Reibberührung mit dem Gegenbauteil ist, das darin besteht, dass das scheibenförmige Bauteil derart ausgebildet wird, dass eine um seine Achse bestehende zyklische Symmetrie gestört ist.

Besonders vorteilhaft ist das erfindungsgemäße Verfahren dann, wenn eine kreisringscheibenförmige Reibfläche des Gegenbauteils in Reibberührung mit der kreisringscheibenförmigen Reibfläche des ringscheibenförmigen Bauteils ist.

Ein ringscheibenförmiges Bauteil mit wenigstens einer senkrecht zu einer Achse des Bauteils gerichteten kreisringscheibenförmigen Reibfläche, die in Einbaulage infolge einer Relativdrehung zu einem Gegenbauteil in gleitende Reibberührung mit dem Gegenbauteil bringbar ist, ist erfindungsgemäß mit um seine Achse gestörter zyklischer Symmetrie ausgebildet.

Vorteilhafterweise wird die kreisringscheibenförmige Reibfläche mit wenigstens einer Vertiefung ausgebildet, deren Tiefe derart ist, dass in ihrem Grund keine Reibberührung mit dem jeweiligen Gegenbauteil stattfindet.

Bevorzugt wird eine Mehrzahl von in Umfangsfläche beabstandeten Vertiefungen ausgebildet.

Die Summe der Umfangswinkel, über die sich die Vertiefungen erstrecken, liegt vorteilhafter Weise zwischen 45 Grad und 180 Grad.

Besonders zweckmäßig ist es, wenn die Summe der Umfangswinkel, über die sich die Vertiefungen erstrecken, zwischen 120 Grad und 180 Grad liegt.

Eine Unsymmetrie der Vertiefungen wird insbesondere durch folgende Merkmale erzielt:

m sei die Zahl der Vertiefungen; $\varphi_i$ die Breite Umfangsrichtung von Vertiefung i(i = 1, ..., $m$), $\psi_i$, $i$ = 1, ..., m der Abstand in Umfangsrichtung zwischen benachbarten Vertiefungen und

$$\varphi_{\mathbf{max}} = \max\{\varphi_i\}, \varphi_{\min} = \min\{\varphi_i\}, i = 1,...m,$$

$$\psi_{\mathbf{max}} = \max\{\psi_i\}, \psi_{\min} = \min\{\psi_i\}, i = 1,...m;$$

dann sollen folgende Bedingungen erfüllt werden:

- Unsymmetrie der Breite von Vertiefungen $\varphi_{max} - \varphi_{min} > 10°$,
- Unsymmetrie des Abstandes zwischen den Vertiefungen $\psi_{max} - \psi_{min} > 10°$.

Bevorzugt ist das erfindungsgemäße Bauteil mit zwei axial beabstandeten, senkrecht zu der Achse gerichteten Reibflächen ausgebildet, von denen jede in einer Einbaulage des Bauteils in gleitender Reibberührung mit einem jeweiligen Gegenbauteil ist, welche Gegenbauteile zumindest einen Teilbereich des Bauteils unter Anpressung zwischen sich aufnehmen, wobei wenigstens eine der Reibflächen mit wenigstens einer Vertiefung ausgebildet ist.

Die Erfindung ist besonders geeignet für ein ringscheibenförmiges Bauteil, das eine Reibberührung zwischen den Schwungscheiben eines Zweimassenschwungrades vermittelnder Reibring ist.

Die Erfindung wird im Folgenden anhand schematischer Zeichnungen beispielsweise und mit weiteren Einzelheiten erläutert.

In den Figuren stellen dar:

Fig. 1    einen Halbschnitt durch ein an sich bekanntes Zweimassenschwungrad, wie es an Hubkolbenbrennkraftmaschinen verwendet wird,

Fig. 2    eine Detailansicht der Fig. 1 in abgeänderter Ausführungsform,

Fig. 3    eine perspektivische Ansicht eines Reibrings,

Fig. 4    unterschiedliche Darstellungen zur Erläuterung der Schwingungsanregung einer Reibscheibe,

Fig. 5    paarweise auftretende Schwingungseigenmoden einer Reibscheibe,

Fig. 6    eine perspektivische Darstellung von an einer Reibscheibe ausgebildeten Vertie- fungen,

Fig. 7    Eigenwerte mit positiven Realteilen einer Reibscheibe,

Fig. 8    ein weiteres Beispiel von Eigenwerten mit positiven Realteilen einer Reibscheibe,

Fig. 9    eine mit einer Vertiefung versehener Reibring in perspektivischer Ansicht und Aufsicht,

Fig. 10   Eigenwerte mit positiven Realteilen des mit einer Vertiefung versehenen Reibrings,

Fig. 11   eine mit zwei Vertiefungen versehener Reibring in perspektivischer Ansicht und Aufsicht,

Fig. 12   Eigenwerte mit positiven Realteilen des mit zwei Vertiefungen versehenen Reibrings,

Fig. 13   eine mit drei Vertiefungen versehener Reibring in perspektivischer Ansicht und Aufsicht,

Fig. 14   Eigenwerte mit positiven Realteilen des mit drei Vertiefungen versehenen Reibrings.

Die Erfindung wird im Folgenden in ihrer Verwendbarkeit zum Vermindern oder Beseitigen von an zwei Massen-Schwungrädern entstehenden Geräuschen, insbesondere Quietschgeräuschen, erläutert.

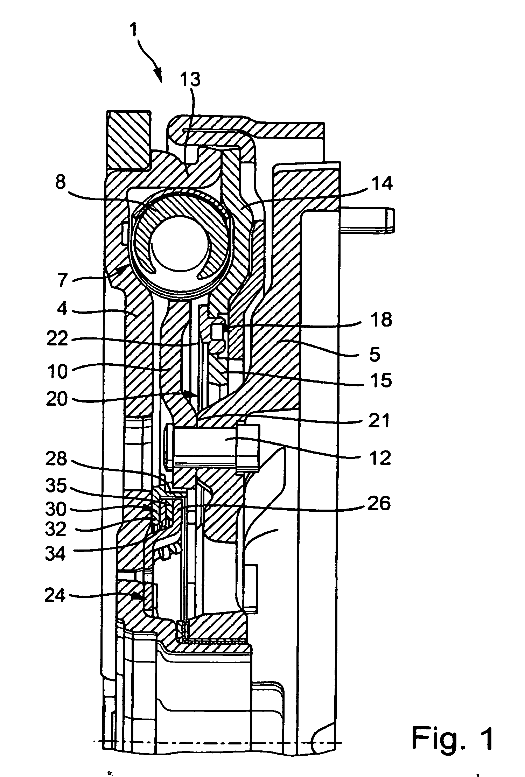

Ein in seinem Aufbau an sich bekanntes Zweimassenschwungrad ist im Halbschnitt in Fig. 1 dargestellt.

Gemäß der Figur weist ein auch als Drehschwingungsdämpfer bezeichnetes Zweimassenschwungrad 1 ein im Allgemeinen drehfest mit der Kurbelwelle einer Brennkraftmaschine verbundenes primäres Schwungrad 4 und ein sekundäres Schwungrad 5 auf. Die beiden auch als Schwungmassen bezeichneten Schwungräder 4 und 5 sind über eine Energiespeichereinrichtung 7 mit einander gekoppelt, die mehrere in Umfangsrichtung verteilt angeordnete Energiespeicherelemente 8, vorzugsweise Schraubendruckfedern, enthält. Das sekundäre Schwungrad 5 ist über eine Nietverbindung 12 mit einem Ringflansch 10 verbunden.

Das primäre Schwungrad 4 hat im Wesentlichen die Gestalt einer Kreisringscheibe, von der radial außen ein axialer Ansatz 13 ausgeht. Vom freien Ende des axialen Ansatzes 13 erstreckt sich ein Ausläufer 14 radial einwärts, der im Wesentlichen die Gestalt einer im Bereich der Energiespeicherelemente 8 nach außen gewölbten Kreisringscheibe hat. An dem radial inneren Abschnitt 15 des Ausläufers 14 des primären Schwungrades ist eine Ringscheibe 18 befestigt, an deren dem Flansch 10 zugewandter Oberfläche eine elastische Dichtmembran 20 anliegt. Die Dichtmembran ist beispielsweise durch eine metallische Tellerfeder gebildet.

Die Dichtmembran 20 enthält einen radial inneren Abschnitt 21, der mehrere Durchgangslöcher aufweist, die zur Positionierung und Befestigung der Dichtmembran an dem sekundären Schwungrad 5 dienen. Der radial innere Abschnitt 21 ist einstückig mit einem radial äußeren Abschnitt 22 verbunden, der an der Ringscheibe 18 anliegt und dazu dient, den Durchtritt von Schmiermittel, das im Bereich der Energiespeicherelemente 8 angeordnet ist, zu einer mit dem sekundären Schwungrad 5 gekoppelten Kupplungseinrichtung zu verhindern.

Die vorzugsweise aus Kunststoff bestehende Ringscheibe 18 dient in erster Linie dazu, eine direkte metallische Berührung zwischen der Dichtmembran 20 und dem Ausläufer 14 bzw. dem primären Schwungrad 4 zu vermeiden.

Wie aus Fig. 1 weiter ersichtlich, ist an einem radial inneren Bereich des primären Schwungrades 4 beispielsweise durch Nieten oder Schrauben ein Ringblech 26 befestigt, das zu dem sekundären Schwungrad 5 hin abgebogen ist und in einem radial gerichteten Ringansatz 26 endet. Radial außerhalb des Ringansatzes 26 ist an dem sekundären Schwungrad 5 mittels axial vorstehender Ansätze 28 ein Reibring 30 befestigt. Die Befestigung des Reibrings 30 an dem sekundären Schwungrad 5 kann derart sein, dass der Reibring 30 drehfest an dem Schwungrad gehalten ist oder in Umfangsrichtung mit Spiel an dem Schwungrad gehalten ist.

Ein radial gerichteter Ringscheibenteil 32 des Reibrings 30 wird von einem Stützring 34 in Anlage an das primäre Schwungrad 4 gedrückt, wobei zwischen dem Stützring 34 und dem Ringansatz 26 ein Tellerfederring 35 angeordnet ist, der die Anpresskraft aufbringt. Der Reibring 30 dient zur Dämpfung von Relativverdrehungen zwischen dem primären Schwungrad 4 und dem sekundären Schwungrad 5, die unter dem Einfluss von zwischen dem primären Schwungrad und dem sekundären Schwungrad wirksamen Drehmomentschwankungen entstehen und zu einer Verformung der Energiespeicherelemente 8 führen. Je nach Vorspannung des Tellerfederrings 35, Art und Größe der in gegenseitiger Anlage befindlichen Flächen und Art der Befestigung des Reibrings 30 am sekundären Schwungrad 5 (mit oder ohne Spiel in Umfangsrichtung) kann die Relativdrehung in zweckentsprechender Weise gedämpft werden.

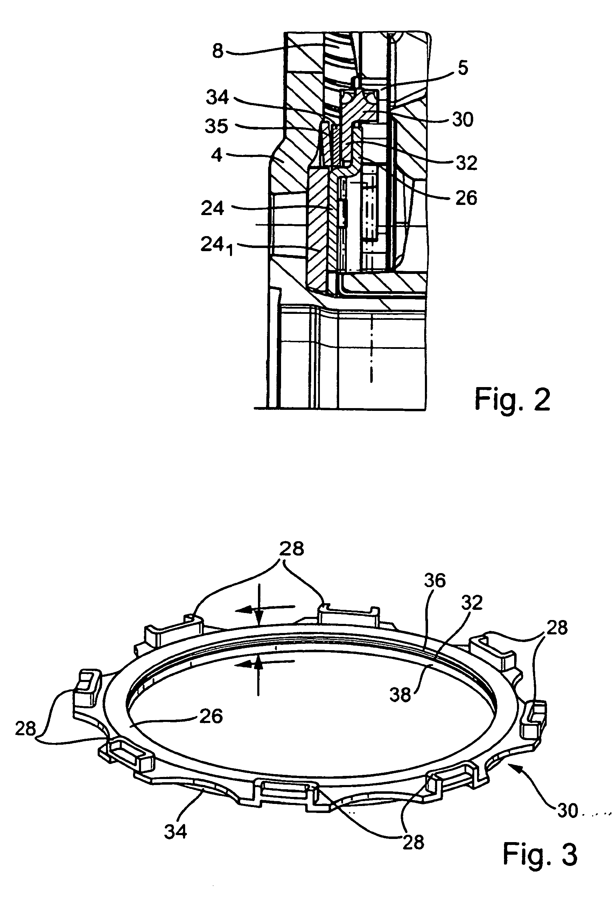

Fig. 2 zeigt den Reibring 30 der Fig. 1 in vergrößerter Darstellung und in gegenüber Fig. 1 etwas modifizierter Anordnung. Für sich entsprechende Teile sind mit gleichen Bezugszeichen wie in der Fig. 1 verwendet.

Der Unterschied der Anordnung gemäß Fig. 2 gegenüber der Fig. 1 besteht darin, dass das Ringblech 24 an einem starr mit dem primären Schwungrad 4 verbundenen Ringflansch $24_1$ befestigt ist und der Stützring 34 und der Tellerfederring 35 zwischen dem Reibring 30 und dem primären Schwungrad 4 angeordnet sind, so dass der Ringscheibenteil 32 des Reibrings 30 in Anlage an den Ringansatz 26 ist.

Es versteht sich, dass auch andere Anordnungen des Reibrings 30 möglich sind, bei denen der Reibring 30 einer Relativdrehung zwischen primären Schwungrad und sekundären Schwungrad eine durch ihn vermittelte Reibkraft entgegensetzt.

Fig. 3 zeigt eine perspektivische Ansicht des Reibrings 30 mit den Ansätzen 28, über die die drehfeste Verbindung des Reibrings 30 mit dem sekundären Schwungrad erfolgt und dem Ringscheibenteil 32, der senkrecht zur Achse des Ringscheibenteils 32 gerichtete kreisringscheibenförmige Reibflächen 36, 38 aufweist, die in Anlage mit entsprechenden Reibflächen des Ringansatzes 26 und des Stützrings 34 sind.

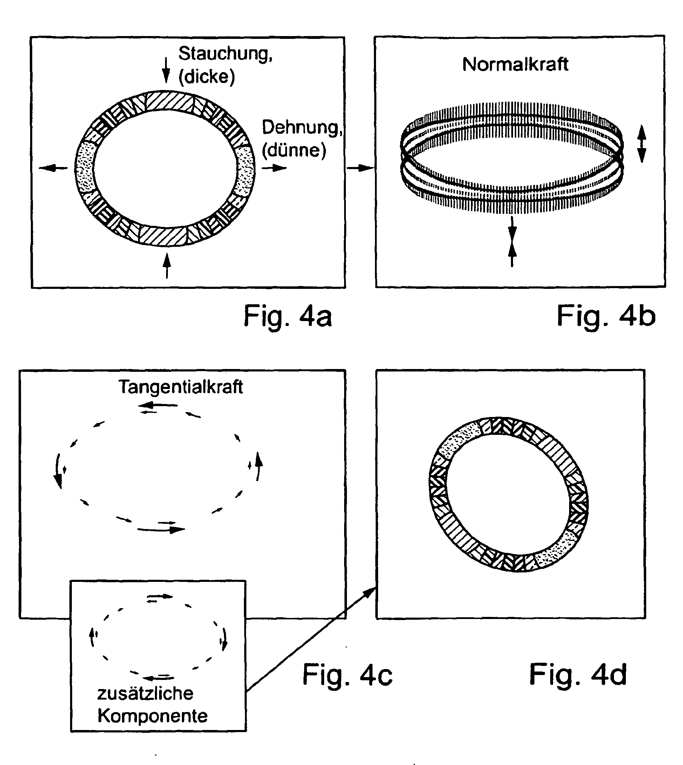

Anhand der Fig. 4 wird im Folgenden das Entstehen einer zu Schwingungen führenden Instabilität erläutert, wobei angenommen wird, dass der dargestellte Ringscheibenteil in Umfangsrichtung zyklisch symmetrisch gehalten ist und von beiden axialen Seiten her von in sich starren Oberflächen unter Anpressung berührt wird, so dass in den Berührbereichen eine Normalkraft herrscht, die bei Relativverdrehungen zu einer Reibkraft in tangentialer Richtung führt. Eine Dickenzunahme führt zu einer Vergrößerung der Normalkraft, die wiederum zu einer Vergrößerung der Tangentialkraft führt, durch die die Ringscheibe in Radialrichtung verformt wird. Eine Dickenabnahme der Ringscheibe führt zu einer Abnahme der Tangentialkraft, die ebenfalls zu einer Verformung der Ringscheibe in Radialrichtung führt.

Dies ist in Fig. 4 verdeutlicht. Im Figurenteil a) bedeuten die verdunkelten Bereiche Schwingungsbäuche der Scheibe bezüglich einer Schwingung in Radialrichtung, wobei in der Umfangsrichtung wegen Querkontraktion jeweils eine Verdickung einer Verdünnung folgt, was zu einer Veränderung der Normalkraft gemäß dem Figurenteil b) führt. Die Veränderung der Normalkräfte führt zu Änderungen der Tangentialkräfte, wie in dem Figurenteil c dargestellt, so dass sich insgesamt eine dynamische Verformung der Scheibe gemäß d ergibt.

Die Ringscheibe hat eine unbegrenzte Zahl von Eigenmoden, die jeweils eine spezifische Form aufweisen. Die radiale Verschiebung der Ringscheibe bei solchen Schwingungsmoden hat in Umfangsrichtung m Maxima und Minima und 2m Knotenlinien. Jeder Mode tritt paarweise auf, wobei gilt:

$$w_A(\vartheta) \leftrightarrow w_B(\vartheta) = w_A\left(\vartheta - \frac{\pi}{2m}\right),$$

wobei $\vartheta$ ein in Umfangrichtung der Ringscheibe gemessener Winkel ist. Zwischen den paarweise auftretenden Moden besteht eine Rückkopplung. Im betrachteten Fall haben die Moden gleiche Eigenfrequenz. Eine Analyse mit Hilfe beispielsweise des Programms ANSYS 10.0 mit Q-R Damped Modalanalyse zeigt, dass die unbegrenzte Zahl von Eigenmoden, die paarweise mit gleicher Eigenfrequenz auftreten, ohne Dämpfung instabil ist. Die Quellen der Instabilität sind die axiale Symmetrie der Ringscheibe, wegen der die große Menge von paarweise auftretenden Moden mit der gleichen Frequenz besteht, und die Querkontraktion, der eine Verbindung bzw. Kopplung zwischen den Schwingungen in der Ebene der Ringscheibe und den Änderungen der Normal- und Tangentialkraft hervorruft.

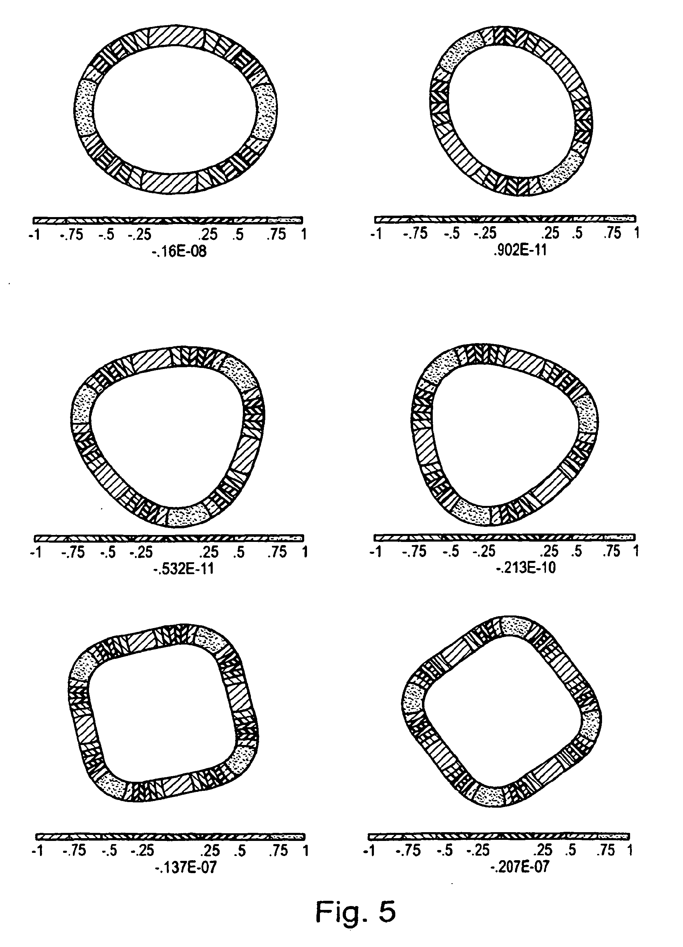

Fig. 5 zeigt in senkrechter Richtung aufeinander folgend drei unterschiedliche Eigenmoden der Ringscheibe bzw. des Reibrings mit vier, sechs und acht Bäuchen und jeweils rechts benachbart den Paarmode, der Knoten dort hat wo im linken Mode Bäuche sind.

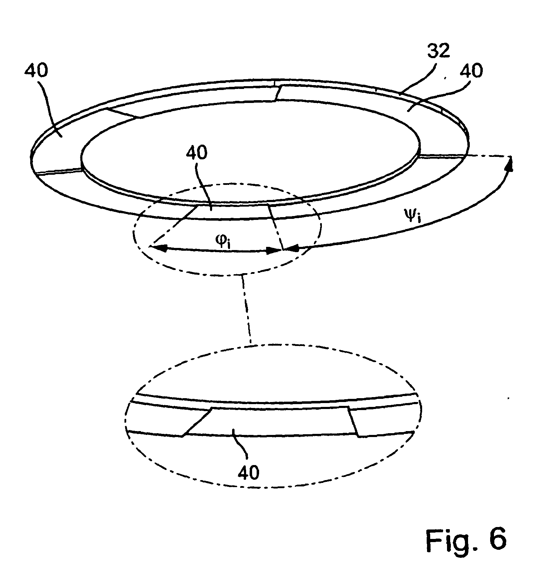

Erfindungsgemäß wird zur Trennung der Eigenfrequenzen der gekoppelten Moden voneinander die in Umfangsrichtung vorhandene Symmetrie des Reibrings 30 bzw. von dessen Ringscheibenteil 32 gestört, wodurch auch die Kraftübertragung durch Querkontraktion geschwächt wird. Die Störung der zyklischen Symmetrie in Umfangsrichtung kann auf unterschiedlichste Weise erfolgen, beispielsweise durch Variationen der Breite des Ringscheibenteils, durch das Ausbilden von Löchern usw. Gute Resultate werden dadurch erzielt, dass am Ringscheibenteil 32 Vertiefungen 40 ausgebildet werden, die sich, wie in Fig. 6 dargestellt, längs eines Umfangswinkels $\varphi_i$ erstrecken und deren Abstand in Umfangsrichtung $\psi_i$ beträgt. Die Vertiefungen 40 können beispielsweise axiale Einfräsungen sein, deren Tiefe vorteilhaft derart ist, dass der Grund der Vertiefung nicht in Anlage an den Stützring 34 oder den Ringansatz 26 kommt. Die Vertiefungen können einseitig oder beidseitig an dem Ringscheibenteil 32 ausgebildet werden.

Grundsätzlich genügt bereits eine Vertiefung, um eine merkliche Verringerung von Geräuschen zu erzielen. Mit zwei oder drei Vertiefungen lässt sich die Instabilität bzw. die Schwingungsentstehung praktisch vollständig beseitigen, wobei mit drei Vertiefungen eine mögliche Unwucht besser beseitigt werden kann.

Der Gesamtumfangswinkel, über den sich die Vertiefungen erstrecken, d.h. die Summe aus $\varphi_i$ beträgt vorteilhafter Weise mehr als 45 Grad, wobei gute Ergebnisse bei einem Summenwinkel von 120 Grad bis 180 Grad erzielt wurden.

Für die Ausbildung der Unsymmetrie in Umfangsrichtung ist folgende Vorgehensweise vorteilhaft:

Angenommen, m sei die Anzahl der Vertiefungen, $\varphi_i$ die Breite in Umfangsrichtung jeder Vertiefung i (i=1, ..., m), $\psi_i$, (i=1, ..., m) der Winkelabstand in Umfangsrichtung zwischen benachbarten Vertiefungen und

$$\varphi_{max} = \max\{\varphi_i\}, \varphi_{min} = \min\{\varphi_i\}, i = 1,...m,$$

$$\psi_{max} = \max\{\psi_i\}, \varphi_{min} = \min\{\psi_i\}, i = 1,...m,$$

Unter der vorgenannten Prämisse sollten folgende Bedingungen erfüllt sein:

Bezüglich der breiten Umfangsrichtung der Vertiefungen gilt: $\varphi_{max} - \varphi_{min} > 10°$.

Bezüglich der Unsymmetrie des Umfangsabstandes zwischen den Vertiefungen gilt: $\psi_{max} - \psi_{min} > 10°$.

Die Breite in Umfangsrichtung der Vertiefungen und der Abstand in Umfangsrichtung zwischen den Vertiefungen kann derart optimiert werden, dass beispielsweise bei einer Q-R Damped Modalanalyse mit dem Programm ANSYS 10.0 die Zahl der Eigenwerte mit positiven Realteilen und der maximale Wert der Realteile minimiert wird.

Nachfolgend werden Beispiele des Einflusses von Vertiefungen 40 gemäß Fig. 6 auf das Schwingungsverhalten einer Ringscheibe erläutert:

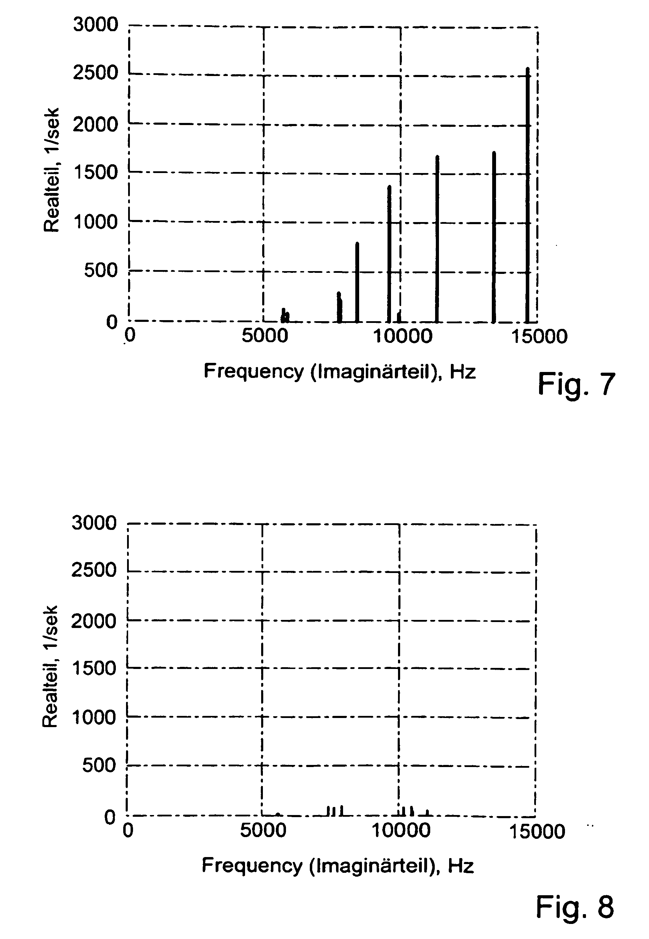

Fig. 7 zeigt Ergebnisse für einen Reibring ohne Vertiefungen, der im Fahrzeug und auf dem Prüfstand deutliche Tendenz zum Quietschen hat. Berechnungen zeigen im Frequenzbereich zwischen 0 und 15000 Hertz gemäß Fig. 7 zwölf Eigenwerte mit positiven Realteilen, wobei der maximale Wert der Realteile bei 2565[1/sec] liegt. Um den Einfluss der Querkontraktion zu analysieren, wurde eine Berechnung mit fiktivem Material des Reibrings mit einer Querkontraktionszahl von Null durchgeführt. In diesem Fall hat der Reibring gemäß Fig. 8 zehn Eigenwerte mit positiven Realteilen und einem maximalen Wert der Realteile von lediglich 82[1/sec]. Eine Reduzierung der Werte der positiven Realteile um einen Faktor 30 gegenüber den Werten gemäß Fig. 7 bei Reibring aus fiktivem Material mit einer Querkontraktionszahl von Null zeigt den großen Einfluss der Querkontraktion auf die Instabilität in betrachtetem Fall.

Anhand der weiteren Figuren wird erläutert, wie das in Fig. 7 dargestellte Schwingungsverhalten des Reibrings mittels Vertiefungen 40 im Sinne einer geringeren Geräuschentstehung verbessert werden kann.

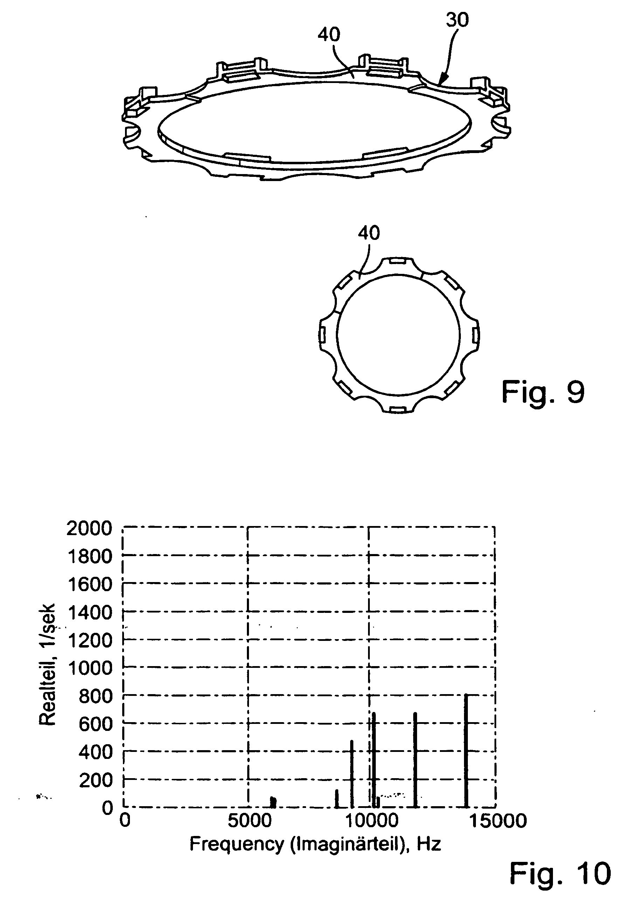

Fig. 9 zeigt perspektivisch und in Aufsicht einen mit einer Vertiefung 40 ausgebildeten Reibring 30. Die Erstreckung der Vertiefung ist aus der Aufsicht ersichtlich. Die Tiefe der Vertiefung 40 beträgt 0,5 mm bei einer Dicke des Reibrings 30 im Bereich der Reibflächen von 2 mm.

Nach Optimierung des Umfangswinkels der Vertiefung 40 liefert die Berechnung gemäß Fig. 10 neun Eigenwerte mit positiven Realteilen und einem maximalen Wert von 794[1/S].

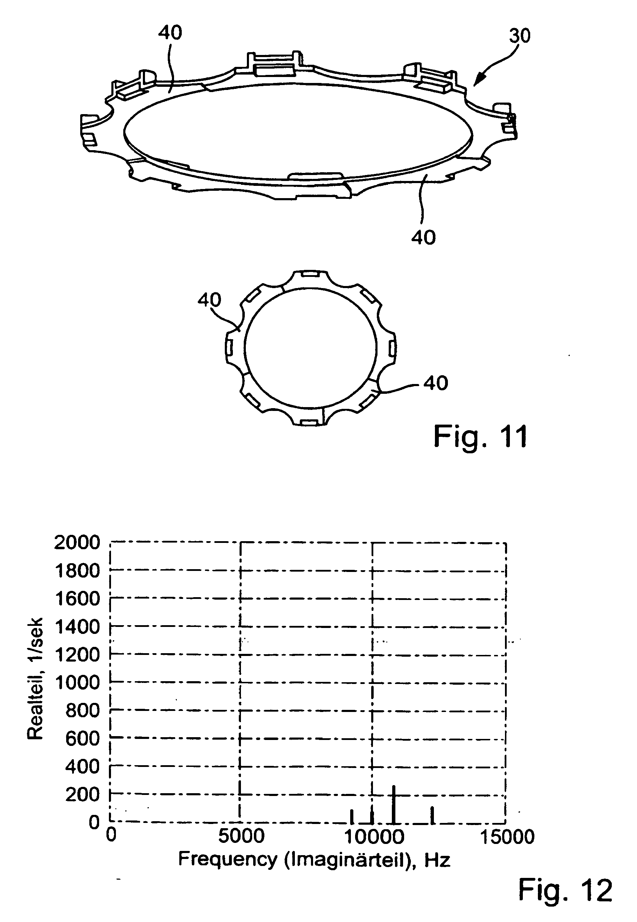

Fig. 11 zeigt eine Ausbildung des Reibrings 30 mit zwei Vertiefungen 40, deren Umfangserstreckung und Lage in der Aufsicht sichtbar ist. Die Berechnung ergibt vier Eigenwerte mit positiven Realteilen und einem maximalen Wert der Realteile von 255[1/S].

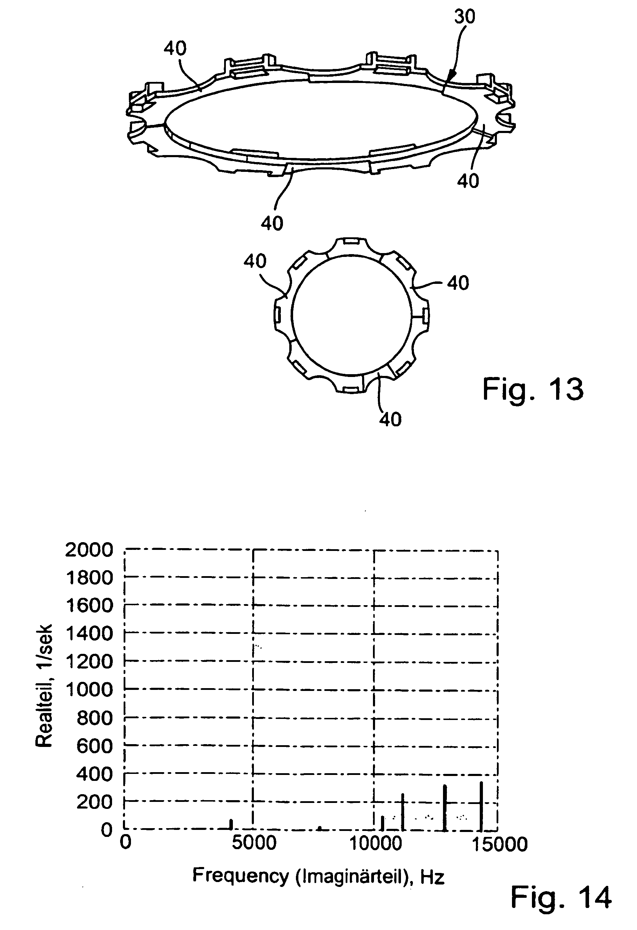

Fig. 13 zeigt eine Alternative mit drei Vertiefungen 40, die in Aufsicht hinsichtlich ihrer Erstreckung und Lage dargestellt sind. Die Berechnung ergibt sechs Eigenwerte mit positiven Realteilen und einem maximalen Wert der Realteile von 324[1/S].

Die Berechnungen wurden ohne Berücksichtigung der Dämpfung durchgeführt. In der Praxis ergibt sich, insbesondere wenn der Reibring 30 aus Kunststoff besteht und die angrenzenden Flächen aus Stahl bestehen, eine hohe Dämpfung, weshalb in der Praxis durchaus eine Reduzierung der Werte der positiven Realteile um einen Faktor acht bis zehn gegenüber den Werten gemäß Fig. 7 bei Varianten mit zwei oder drei Vertiefungen erzielt wird, was zu einer erheblichen Verminderung von Quietschgeräuschen führt.

Die Erfindung wurde an einem Beispiel geschildert, bei dem ein kreisringscheibenförmiges Bauteil an seinen kreisringscheibenförmigen Stirn- bzw. Reibflächen in gleitender Reibberührung mit entsprechenden Gegenflächen ist. Die Erfindung kann auch Vorteilhaft für Ringscheiben eingesetzt werden, die nur einseitig in Reibberührung mit einem Gegenbauteil sind, wobei das oder die Gegenbauteile nicht zwangsläufig über den Gesamtumfang der Kreisringscheibe an dieser anliegen muss bzw. müssen.

## **Bezugszeichenliste**

| | |
|---|---|
| 1 | Zweimassenschwungrad |
| 4 | primäres Schwungrad |
| 5 | sekundäres Schwungrad |
| 7 | Energiespeichereinrichtung |
| 8 | Energiespeicherelement |
| 10 | Flansch |
| 12 | Nietverbindung |
| 13 | axialer Ansatz |
| 14 | Ausläufer |
| 15 | radial innerer Abschnitt |
| 18 | Ringscheibe |
| 20 | Dichtmembran |
| 21 | radial innerer Abschnitt |
| 22 | radial äußerer Abschnitt |
| 24 | Ringblech |
| $24_1$ | Ringflansch |
| 26 | Ringansatz |
| 30 | Reibring |
| 32 | Ringscheibenteil |
| 34 | Stützring |
| 35 | Tellerfederring |
| 36 | Reibfläche |
| 38 | Reibfläche |
| 40 | Vertiefung |

## **Patentansprüche**

1. Verfahren zum Vermindern von Schwingungen eines insgesamt ringscheibenförmigen Bauteils (30) mit wenigstens einer senkrecht zu einer Achse des Bauteils gerichteten kreisringscheibenförmigen Reibfläche, die infolge einer Relativdrehung zu einem Gegenbauteil in gleitender Reibberührung mit dem Gegenbauteil (26, 34) ist, **dadurch gekennzeichnet, dass** bei dem Verfahren das scheibenförmige Bauteil derart ausgebildet wird, dass eine um seine Achse bestehende zyklische Symmetrie gestört ist.

2. Verfahren nach Anspruch 1, bei welchem eine kreisringscheibenförmige Reibfläche des Gegenbauteils (26, 34) in Reibberührung mit der kreisringscheibenförmigen Reibfläche des ringscheibenförmigen Bauteils (30) ist.

3. Ringscheibenförmiges Bauteil mit wenigstens einer senkrecht zu einer Achse des Bauteils (30) gerichteten kreisringscheibenförmigen Reibfläche, die in Einbaulage infolge einer Relativdrehung zu einem Gegenbauteil (26, 34) in gleitende Reibberührung mit dem Gegenbauteil bringbar ist, **dadurch gekennzeichnet, dass** das ringscheibenförmige Bauteil mit um seine Achse gestörter zyklischer Symmetrie ausgebildet ist.

4. Bauteil nach Anspruch 3, wobei die kreisringscheibenförmige Reibfläche mit wenigstens einer Vertiefung (40) ausgebildet ist, deren Tiefe derart ist, dass in ihrem Grund keine Berührung mit dem jeweiligen Gegenbauteil stattfindet.

5. Bauteil nach Anspruch 3 oder 4, wobei eine Mehrzahl von in Umfangsrichtung beabstandeten Vertiefungen (40) ausgebildet ist.

6. Bauteil nach Anspruch 5, wobei die Summe der Umfangswinkel, über die sich die Vertiefungen (40) erstrecken, zwischen 45° und 180° beträgt.

7. Bauteil nach Anspruch 5, wobei die Summe der Umfangswinkel, über die sich die Vertiefungen (40) erstrecken, zwischen 120° und 180° beträgt.

8. Bauteil nach einem der Ansprüche 4 bis 7, wobei eine Unsymmetrie der Vertiefungen (40) wie folgt ist:

   m sei die Zahl der Vertiefungen ist; $\varphi_i$ die Breite in Umfangsrichtung von Vertiefung i($i = 1,..., m$), $\psi_i$, $i = 1, ..., m$ der Abstand in Umfangsrichtung zwischen benachbarten Vertiefungen und

   $$\varphi_{\mathbf{max}} = \max\{\varphi_i\}, \varphi_{\mathbf{min}} = \min\{\varphi_i\}, i = 1,..m,$$

   $$\psi_{\mathbf{max}} = \max\{\psi_i\}, \psi_{\mathbf{min}} = \min\{\psi_i\}, i = 1,..m,$$

   dann sollen folgende Bedingungen erfüllt werden:

   • Unsymmetrie der Breite von Vertiefungen $\varphi_{max}$-$\varphi_{min}$ > 10°,
   • Unsymmetrie des Abstandes zwischen den Vertiefungen $\psi_{max}$ - $\psi_{max}$ > 10°.

9. Bauteil nach einem der Ansprüche 3 bis 8, welches Bauteil (18) mit zwei axial beabstandeten, senkrecht zu der Achse gerichteten Reibflächen ausgebildet ist, von denen jede in einer Einbaulage des Bauteils in gleitender Reibberührung mit einem jeweiligen Gegenbauteil (26, 34) ist, welche Gegenbauteile zumindest einen Teilbereich des Bauteils unter Anpressung zwischen sich aufnehmenden, wobei wenigstens eine der Reibflächen mit wenigstens einer Vertiefung ausgebildet ist.

10. Bauteil nach einem der Ansprüche 3 bis 9, wobei das ringscheibenförmige Bauteil ein eine Reibberührung zwischen den Schwungscheiben eines Zweimassenschwungrades (1) vermittelnde Reibring (30) ist.

**Claims**

1. Method for the reduction of oscillations of a substantially annular-disc-shaped component (30) having at least one toroidal-disc-shaped friction face which is directed perpendicularly to an axis of the component and is in sliding frictional contact with a counter-component (26, 34) as a result of relative rotation with respect to the latter, **characterized in that**, in the method, the disc-shaped component is designed in such a way that a cyclic symmetry present about its axis is disturbed.

2. Method according to Claim 1, in which a toroidal-disc-shaped friction face of the counter-component (26, 34) is in frictional contact with the toroidal-disc-shaped friction face of the annular-disc-shaped component (30).

3. Annular-disc-shaped component having at least one toroidal-disc-shaped friction face which is directed perpendicular to an axis of the component (30) and, in the installation position, can be brought into sliding frictional contact with a counter-component (26, 34) as a result of relative rotation with respect to the latter, **characterized in that** the annular-disc-shaped component is designed with disturbed cyclic symmetry about its axis.

4. Component according to Claim 3, the toroidal-disc-shaped friction face being designed with at least one depression (40), the depth of which is such that, in its bottom, no contact with the respective counter-component takes place.

5. Component according to Claim 3 or 4, a plurality of depressions (40) spaced apart in the circumferential direction being formed.

6. Component according to Claim 5, the sum of the circumferential angles over which the depressions (40) extend amounting to between 45° and 180°.

7. Component according to Claim 5, the sum of the circumferential angles over which the depressions (40) extend amounting to between 120° and 180°.

8. Component according to one of Claims 4 to 7, an asymmetry of the depressions (40) being as follows:

   m being the number of depressions; $\varphi_i$ the width in the circumferential direction of a depression $i$ ($i = 1, ..., m$), $\Psi_i$, $i = 1, ..., m$ the distance in the circumferential direction between adjacent depressions and

   $$\varphi_{max} = \max \{\varphi_i\}, \ \varphi_{min} = \min \{\varphi_i\}, \ i = 1,...m,$$

   $$\Psi_{max} = \max \{\Psi_i\}, \ \Psi_{min} = \min \{\Psi_i\}, \ i = 1,...m,$$

   then the following conditions should be satisfied:

   • asymmetry of the width of depressions $\varphi_{max} - \varphi_{min} > 10°$,
   • asymmetry of the distance between the depressions $\Psi_{max} - \Psi_{max} > 10°$.

9. Component according to one of Claims 3 to 8, which component (18) is designed with two axially spaced-apart friction faces which are directed perpendicularly to the axis and each of which, in an installation position of the component, is in sliding frictional contact with the respective counter-component (26, 34), which counter-components accommodate between them at least a part-region of the component, with pressure exerted, at least one of the friction faces being designed with at least one depression.

10. Component according to one of Claims 3 to 9, the annular-disc-shaped component being a friction ring (30) which implements frictional contact between the flywheel discs of a two-mass flywheel (1).


**Revendications**

1. Procédé destiné à réduire les oscillations d'un composant globalement en forme de disque annulaire (30) avec au moins une face de friction en forme de disque annulaire circulaire orientée perpendiculairement à un axe du composant, qui est en contact de friction glissant avec un composant opposé (26, 34) par suite d'une rotation relative par rapport au composant opposé, **caractérisé en ce que**, lors du procédé, le composant en forme de disque est réalisé de telle manière qu'une symétrie cyclique existant autour de son axe soit perturbée.

2. Procédé selon la revendication 1, dans lequel une face de friction en forme de disque annulaire du composant opposé (26, 34) est en contact de friction avec la face de friction en forme de disque annulaire circulaire du composant en forme de disque annulaire (30).

3. Composant en forme de disque annulaire avec au moins une face de friction en forme de disque annulaire circulaire orientée perpendiculairement à un axe du composant (30), qui, en position montée, peut être mise en contact de friction glissant avec le composant opposé (26, 34) par suite d'une rotation relative par rapport au composant opposé, **caractérisé en ce que** le composant en forme de disque annulaire est réalisé avec une symétrie cyclique perturbée autour de son axe.

4. Composant selon la revendication 3, dans lequel la face de friction en forme de disque annulaire circulaire est réalisée avec au moins un creux (40), dont la profondeur est telle qu'il ne se produise, dans son fond, aucun contact avec le composant opposé respectif.

5. Composant selon la revendication 3 ou 4, dans lequel il se trouve une multiplicité de creux (40) espacés en direction périphérique.

6. Composant selon la revendication 5, dans lequel la somme des angles circonférentiels, sur laquelle les creux (40) s'étendent, vaut entre 45° et 180°.

7. Composant selon la revendication 5, dans lequel la somme des angles circonférentiels, sur laquelle les creux (40) s'étendent, vaut entre 120° et 180°.

8. Composant selon l'une quelconque des revendications 4 à 7, dans lequel l'asymétrie des creux (40) est définie comme suit:

   soit
   m le nombre des creux; $\varphi_i$ la largeur du creux $i$ en direction périphérique ($i = 1, ..., m$), $\psi_i$ ($i = 1, ..., m$) la distance entre des creux voisins en direction périphérique, et

   $$\varphi_{\max} = \max\{\varphi_i\}, \quad \varphi_{\min} = \min\{\varphi_i\}, \quad i = 1, \ldots, m,$$

   $$\psi_{\max} = \max\{\psi_i\}, \quad \psi_{\min} = \min\{\psi_i\}, \quad i = 1, \ldots, m,$$

   les relations suivantes doivent alors être satisfaites:

   • asymétrie de la largeur des creux $\varphi_{\max}$-$\varphi_{\min}$ >10°,
   • asymétrie de la distance entre les creux $\psi_{\max}$-$\psi_{\min}$ >10°.

9. Composant selon l'une quelconque des revendications 3 à 8, composant (18) qui est réalisé avec deux faces de friction axialement espacées, orientées perpendiculairement à l'axe, dont chacune est, en position montée du composant, en contact de friction glissant avec un composant opposé respectif (26, 34), composés opposés qui retiennent entre eux par pression au moins une région partielle du composant, dans lequel au moins une des faces de friction est réalisée avec au moins un creux.

10. Composant selon l'une quelconque des revendications 3 à 9, dans lequel le composant en forme de disque annulaire est un anneau de friction (30) assurant un contact de friction entre les volants-moteurs d'un volant-moteur à deux masses (1).

1

13

8

14

7

4

22

10

20

18

5

15

21

12

28

35

30

32

34

26

24

Fig. 1

Fig. 2

Fig. 3

Fig. 4a

Fig. 4b

Fig. 4c

Fig. 4d

-1  -.75  -.5  -.25      .25  .5    .75  1
                -.16E-08

-1  -.75  -.5  -.25      .25  .5    .75  1
                .902E-11

-1  -.75  -.5  -.25      .25  .5    .75  1
                -.532E-11

-1  -.75  -.5  -.25      .25  .5    .75  1
                -.213E-10

-1  -.75  -.5  -.25      .25  .5    .75  1
                -.137E-07

-1  -.75  -.5  -.25      .25  .5    .75  1
                -.207E-07

## Fig. 5

Fig. 6

Fig. 7

Fig. 8

**40**

**30**

**40**

Fig. 9

Fig. 10

Fig. 11

Fig. 12

40                    30

40

40

40                    40

40

**Fig. 13**

2000
1800
1600
1400
1200
1000
800
600
400
200
0

Realteil, 1/sek

0        5000        10000       15000

Frequency (Imaginärteil), Hz

**Fig. 14**

**EP 1 956 265 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4341371 A1